# EUROPÄISCHE PATENTSCHRIFT

(11) **EP 3 715 160 B1**
(45) Veröffentlichungstag und Bekanntmachung des Hinweises auf die Patenterteilung: **06.10.2021**
(21) Anmeldenummer: 20174980.1
(22) Anmeldetag: 07.08.2012
(51) Int. Cl.: B60J 5/04, E05B 83/42, E05C 19/00

(54) **VERRIEGELUNGSVORRICHTUNG FÜR EINE KRAFTFAHRZEUG-TÜR**
LOCKING DEVICE FOR A MOTOR VEHICLE DOOR
DISPOSITIF DE VERROUILLAGE D'UNE PORTE DE VÉHICULE AUTOMOBILE

(30) Priorität: 31.10.2011 DE 102011117399
(43) Veröffentlichungstag der Anmeldung: 30.09.2020
(62) Teilanmeldung aus: 12005711.2
(73) Patentinhaber: MAN Truck & Bus SE, 80995 München (DE)
(72) Erfinder: Raykov, Iassen, 80995 München (DE)
(74) Vertreter: v. Bezold & Partner Patentanwälte - PartG mbB

(56) Entgegenhaltungen:
- DE-A1- 2 930 250
- DE-A1- 3 148 035

## Beschreibung

Die Erfindung betrifft eine Verriegelungsvorrichtung zum Verriegeln einer Kraftfahrzeug-Türe, insbesondere einer Kraftfahrzeug-Schwenktüre mit Hubfunktion, an einem Kraftfahrzeug-Türportal.

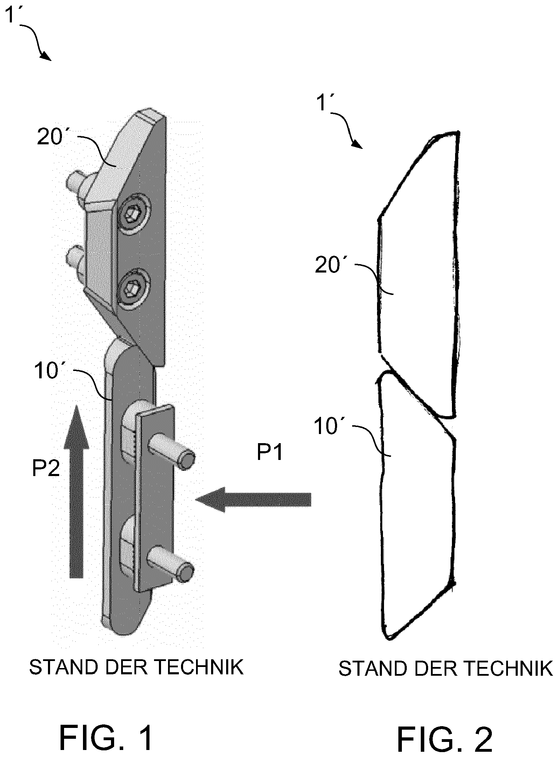

Figur 1 zeigt eine Perspektivansicht und Figur 2 eine schematische Seitenansicht einer herkömmlichen Verriegelungsvorrichtung 1' zum Verriegeln einer Kraftfahrzeug-Schwenktüre mit Hubfunktion an einem Kraftfahrzeug-Türportal. Eine Schwenktüre mit Hubfunktion zeichnet sich insbesondere dadurch aus, dass sie eine definierte Schwenkbewegung (siehe Pfeil P1) von einem geöffneten Zustand in einen geschlossenen Zustand ausführt und anschließend eine Hubbewegung (siehe Pfeil P2) beschreibt. Durch diese Verfahrkurve, insbesondere die Hubbewegung, kann mittels der Verriegelungsvorrichtung 1' eine Verriegelung der Schwenktüre an dem Türportal ermöglicht werden. Zum Öffnen der Schwenktüre wird die Hubbewegung zunächst reversiert, um die Verriegelungsvorrichtung 1' in einen entriegelten Zustand zu bringen, woraufhin die Schwenktüre wieder nach außen verschwenkbar ist, um in den geöffneten Zustand gebracht werden zu können.

Die Verriegelungsvorrichtung 1' umfasst einen Schließnocken 10', der an der Schwenktüre befestigt ist, und einen Schließkeil 20', der an dem Türportal befestigt ist. Während des Schließvorgangs der Schwenktüre bewegt sich der Schließnocken 10' unter den Schließkeil 20' und wenn die Hubbewegung der Schwenktüre ausgeführt wird, verriegeln der Schließnocken 10' und der Schließkeil 20' miteinander. Der Schließnocken 10' und der Schließkeil 20' weisen jeweils eine einzige Verkeilfläche auf, die vorgesehen sind, um miteinander zu verriegeln. Der Schließnocken 10' und der Schließkeil 20' weisen einen unterschiedlichen Aufbau auf, so dass stets zwei unterschiedliche Teile 10' und 20' zu fertigen sind. Der Schließnocken 10' kann ausschließlich als Schließnocken fungieren, während der Schließkeil 20' ausschließlich als Schließkeil fungieren kann.

DE 29 30 250 A1 und DE 31 48 035 A1 offenbaren Verriegelungsvorrichtungen mit selbstzentrierenden Verriegelungsteilen.

Eine Aufgabe der Erfindung ist es, eine alternative und/oder verbesserte Verriegelungsvorrichtung zu schaffen.

Diese Aufgabe kann insbesondere durch die Merkmale des Hauptanspruchs gelöst werden.

Erfindungsgemäß wird eine Verriegelungsvorrichtung geschaffen, insbesondere zum Verriegeln einer Kraftfahrzeug-Türe, vorzugsweise einer Kraftfahrzeug-Schwenktüre mit Hubfunktion, an einem Kraftfahrzeug-Türportal. Das Kraftfahrzeug ist vorzugsweise ein Nutzfahrzeug, insbesondere ein Omnibus.

Die Verriegelungsvorrichtung umfasst ein erstes Verriegelungsteil zur Befestigung an der Kraftfahrzeug-Türe.

Die Verriegelungsvorrichtung umfasst ferner ein zweites Verriegelungsteil zur Befestigung an dem Kraftfahrzeug-Türportal. Vorzugsweise kann das Kraftfahrzeug-Türportal von der Kraftfahrzeug-Türe geöffnet und geschlossen werden.

Das erste Verriegelungsteil und das zweite Verriegelungsteil sind konfiguriert, um miteinander zu verriegeln, vorzugsweise, wenn das Kraftfahrzeug-Türportal durch die Kraftfahrzeug-Türe geschlossen ist oder geschlossen wird.

Es ist möglich, dass das erste Verriegelungsteil und das zweite Verriegelungsteil im Wesentlichen identisch ausgeführt sind. Besonders vorteilhaft daran ist, dass nicht mehr wie herkömmlich zwei unterschiedliche Verriegelungsteile zu fertigen sind, sondern zwei identische, woraus sich insbesondere Kostenersparnisse ergeben (z.B. im Hinblick auf Herstellkosten, Werkzeugkosten, Verwaltungskosten, etc.).

Es ist möglich, dass das erste Verriegelungsteil und das zweite Verriegelungsteil so konfiguriert sind, dass sie selbstzentrierend miteinander verriegeln. Besonders vorteilhaft daran ist die Selbstzentrierung, die einen verbesserten und/oder sichereren Verriegelungsvorgang gegenüber herkömmlichen Verriegelungsvorrichtungen ermöglicht. Vorzugsweise umfasst das erste Verriegelungsteil einen keilförmigen Vorsprung und das zweite Verriegelungsteil eine keilförmige Aussparung, die so konfiguriert sind, dass sie selbstzentrierend miteinander verriegeln.

Es ist möglich, dass der keilförmige Vorsprung durch zwei Verriegelungsflächen definiert wird und die keilförmige Aussparung durch zwei Verriegelungsflächen definiert wird.

Es wird ersichtlich, dass insbesondere durch den keilförmigen Vorsprung, vorzugsweise dessen zwei Verriegelungsflächen, und die keilförmige Aussparung, vorzugsweise deren zwei Verriegelungsflächen, das erste Verriegelungsteil und das zweite Verriegelungsteil zweckmäßig sicherer und/oder selbstzentrierend miteinander verriegeln.

Im Rahmen der Erfindung können das erste Verriegelungsteil, insbesondere der keilförmige Vorsprung, und das zweite Verriegelungsteil, insbesondere die keilförmige Aussparung, jedwede Form aufweisen, die geeignet ist, um ein vorzugsweise selbstzentrierendes Verriegeln des ersten Verriegelungsteils und des zweiten Verriegelungsteils zu gewährleisten.

Der keilförmige Vorsprung und die keilförmige Aussparung sind vorzugsweise im Wesentlichen V-förmig ausgebildet, z.B. klassisch V-förmig, aber auch z.B. mit abgeflachtem oder abgerundetem Scheitel.

Es ist möglich, dass das erste Verriegelungsteil zusätzlich zumindest ein Langloch (vorzugsweise zumindest zwei Langlöcher) umfasst und das zweite Verriegelungsteil zumindest ein Langloch (vorzugsweise zumindest zwei Langlöcher) umfasst, so dass die Befestigungspositionen des ersten Verriegelungsteils und des zweiten Verriegelungsteils zweckmäßig entlang der Langlöcher veränderbar einstellbar sind.

Bei einer bevorzugten Ausführungsform kann das erste Verriegelungsteil zumindest ein Befestigungsmittel (vorzugsweise zwei Befestigungsmittel) umfassen, das über das zumindest eine Langloch an dem ersten Verriegelungsteil an der Kraftfahrzeug-Türe befestigbar ist. Ebenso kann das zweite Verriegelungsteil zumindest ein Befestigungsmittel (vorzugsweise zwei Befestigungsmittel) umfassen, das über das zumindest eine Langloch in dem zweiten Verriegelungsteil an dem Kraftfahrzeug-Türportal befestigbar ist. Die Befestigungsmittel sind vorzugsweise Schrauben.

Erfindungsgemäß umfasst das erste Verriegelungsteil zumindest einen Nutenstein (vorzugsweise zwei Nutensteine), der konfiguriert ist, um in einer Längsnut in der Kraftfahrzeug-Türe positioniert zu werden, und das zweite Verriegelungsteil zumindest einen Nutenstein umfasst, der konfiguriert ist, um in einer Längsnut in dem Kraftfahrzeug-Türportal positioniert zu werden, so dass die Befestigungspositionen des ersten Verriegelungsteils und des zweiten Verriegelungsteils zweckmäßig entlang der Längsnuten veränderbar einstellbar sind.

Erfindungsgemäß ist das erste Verriegelungsteil über zumindest einen Nutenstein an der Kraftfahrzeug-Türe befestigbar während das zweite Verriegelungsteil über zumindest einen Nutenstein an dem Kraftfahrzeug-Türportal befestigbar ist.

Insbesondere sind das erste Verriegelungsteil und das zweite Verriegelungsteil so konfiguriert, dass sie vorzugsweise selbstzentrierend miteinander verriegeln, wenn das erste Verriegelungsteil eine Hubbewegung ausführt und/oder wenn das Kraftfahrzeug-Türportal durch die Kraftfahrzeug-Türe geschlossen ist oder wird.

Zweckmäßig kann das Kraftfahrzeug-Türportal durch die Kraftfahrzeug-Türe geöffnet und geschlossen werden.

Es ist möglich, dass das erste Verriegelungsteil sich während des Schließvorgangs der Kraftfahrzeug-Türe unter das zweite Verriegelungsteil bewegt, insbesondere unter das zweite Verriegelungsteil verschwenkt wird, und/oder mit dem zweiten Verriegelungsteil verriegelt, wenn die Kraftfahrzeug-Türe und somit das erste Verriegelungsteil eine Hubbewegung ausführt.

Die Erfindung umfasst auch eine Anordnung, die eine Kraftfahrzeug-Türe, ein Kraftfahrzeug-Türportal und zumindest eine wie hierin beschriebene Verriegelungsvorrichtung aufweist. Außerdem umfasst die Erfindung ein Kraftfahrzeug mit einer solchen Anordnung.

Vorzugsweise umfasst die Anordnung zwei Verriegelungsvorrichtungen an der Kraftfahrzeug-Türe und zwei Verriegelungsvorrichtungen an dem Kraftfahrzeug-Türportal.

Das Kraftfahrzeug ist vorzugsweise ein Nutzfahrzeug, insbesondere eine Omnibus.

Zu erwähnen ist noch, dass im Rahmen der Erfindung das erste Verriegelungsteil als untrennbarer Bestandteil der Kraftfahrzeug-Türe ausgeführt sein kann (z.B. trennbar nur durch Zerstörung) und/oder das zweite Verriegelungsteil als untrennbarer Bestandteil des Kraftfahrzeug-Türportals ausgeführt sein kann (z.B. trennbar nur durch Zerstörung). Bevorzugt ist aber eine Befestigung z.B. mittels der beschriebenen Befestigungsmittel (z.B. Schrauben) oder mittels der beschriebenen Nutensteine.

Die vorstehend beschriebenen Merkmale und bevorzugten Ausführungsbeispiele der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele in Verbindung mit den beigefügten Figuren.
- Fig. 1: zeigt eine Perspektivansicht einer Verriegelungsvorrichtung zum Verriegeln einer Kraftfahrzeug-Schwenktüre an einem Kraftfahrzeug-Türportal gemäß Stand der Technik,
- Fig. 2: zeigt eine Seitenansicht der Verriegelungsvorrichtung aus Fig. 1,
- Fig. 3: zeigt eine Draufsicht auf ein erstes Verriegelungsteil für eine Verriegelungsvorrichtung gemäß einer Ausführungsform der Erfindung,
- Fig. 4: zeigt eine Draufsicht auf ein zweites Verriegelungsteil für eine Verriegelungsvorrichtung gemäß einer Ausführungsform der Erfindung,
- Fig. 5: zeigt eine Draufsicht auf die in den Figuren 3 und 4 gezeigten Verriegelungsteile in verriegeltem Zustand,
- Fig. 6: zeigt eine perspektivische Ansicht einer Verriegelungsvorrichtung in entriegeltem Zustand gemäß einer Ausführungsform der Erfindung,
- Fig. 7: zeigt eine perspektivische Ansicht der Verriegelungsvorrichtung aus Fig. 6 in verriegeltem Zustand,
- Fig. 8: zeigt eine Seitenansicht der Verriegelungsvorrichtung aus den Figuren 6 und 7 in verriegeltem Zustand,
- Fig. 9: zeigt eine Seitenansicht einer Verriegelungsvorrichtung in verriegeltem Zustand gemäß einer nicht erfindungsgemäßen Ausführungsform, und
- Fig. 10: zeigt eine Seitenansicht einer Verriegelungsvorrichtung in verriegeltem Zustand gemäß einer Ausführungsform der Erfindung.

Die unter Bezugnahme auf die Figuren beschriebenen Ausführungsformen stimmen teilweise überein, wobei ähnliche oder identische Teile mit dem gleichen Bezugszeichen versehen sind, und zu deren Erläuterung auch auf die Beschreibung anderer Ausführungsformen oder Figuren verwiesen wird, um Wiederholungen zu vermeiden.

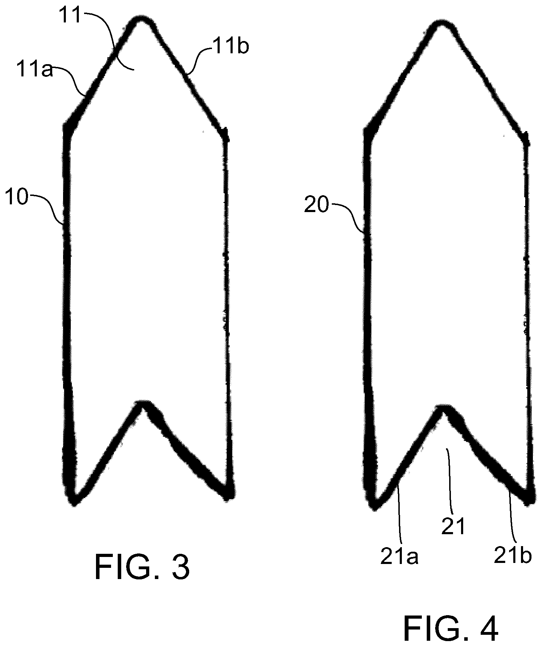

Fig. 3 zeigt eine schematische Draufsicht auf ein erstes Verriegelungsteil 10. Das erste Verriegelungsteil 10 umfasst einen keilförmigen Vorsprung 11, der durch zwei Verriegelungsflächen 11a und 11b definiert wird.

Fig. 4 zeigt eine schematische Draufsicht auf ein zweites Verriegelungsteil 20. Das zweite Verriegelungsteil 20 umfasst eine keilförmige Aussparung 21, die durch zwei Verriegelungsflächen 21a und 21b definiert wird.

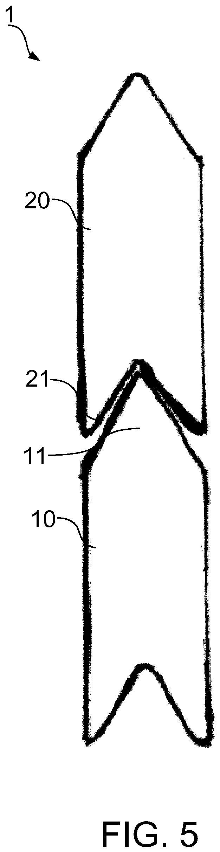

Fig. 5 zeigt eine schematische Draufsicht auf die in den Figuren 3 und 4 gezeigten ersten und zweiten Verriegelungsteile 10 und 20 in verriegeltem Zustand.

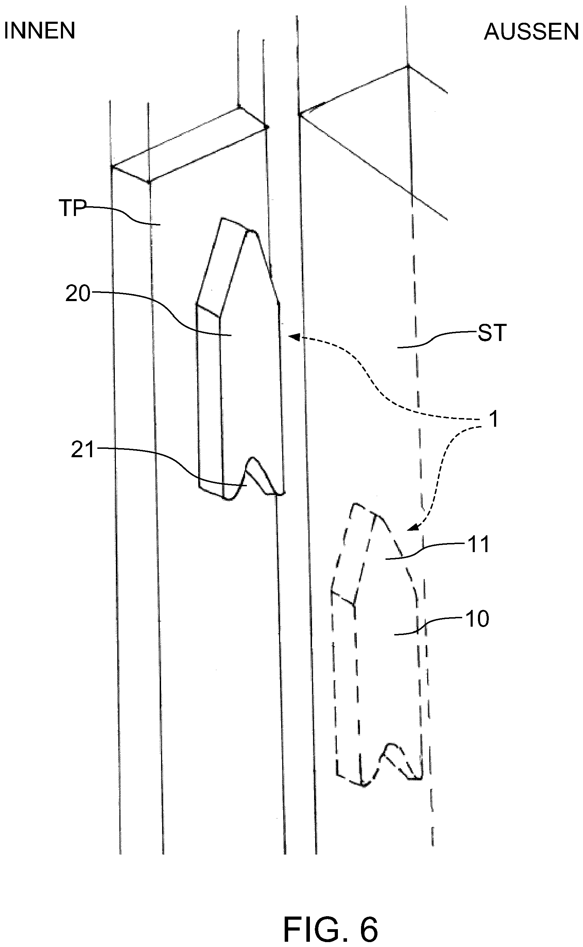

Das erste Verriegelungsteil 10 und das zweite Verriegelungsteil 20 sind vorgesehen, eine Verriegelungsvorrichtung 1 auszubilden, die zum Verriegeln einer Kraftfahrzeug-Türe ST (siehe z.B. Fig. 6), insbesondere einer Kraftfahrzeug-Schwenktüre mit Hubfunktion, an einem Kraftfahrzeug-Türportal TP (siehe z.B. Fig. 6) dient. Das erste Verriegelungsteil 10 ist zur Befestigung an der Türe ST vorgesehen, während das zweite Verriegelungsteil 20 zur Befestigung an dem Türportal TP vorgesehen ist, das durch die Türe ST geöffnet und geschlossen werden kann.

Wie aus den Figuren 3 bis 5 ersichtlich, sind das erste Verriegelungsteil 10 und das zweite Verriegelungsteil 20 identisch ausgeführt. Außerdem sind das erste Verriegelungsteil 10 und das zweite Verriegelungsteil 20 so konfiguriert, dass sie selbstzentrierend und sicher miteinander verriegeln, wenn die Türe ST und somit das erste Verriegelungsteil 10 eine Hubbewegung ausführt oder allgemein die Türe ST geschlossen wird oder ist.

Der keilförmige Vorsprung 11 ist V-förmig ausgebildet. Der keilförmige Vorsprung 11 kann z.B. klassisch V-förmig, mit spitzem Scheitel, abgeflachtem Scheitel oder abgerundetem Scheitel ausgeführt werden.

Ebenso ist die keilförmige Aussparung 21 V-förmig ausgebildet. Die keilförmige Aussparung 21 kann z.B. klassisch V-förmig, mit spitzem Scheitel, abgeflachtem Scheitel oder abgerundetem Scheitel ausgeführt werden.

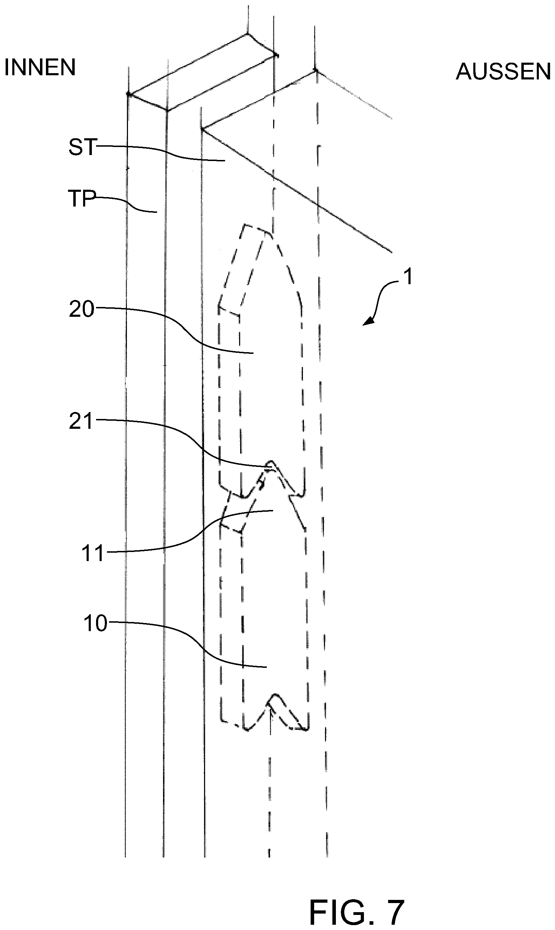

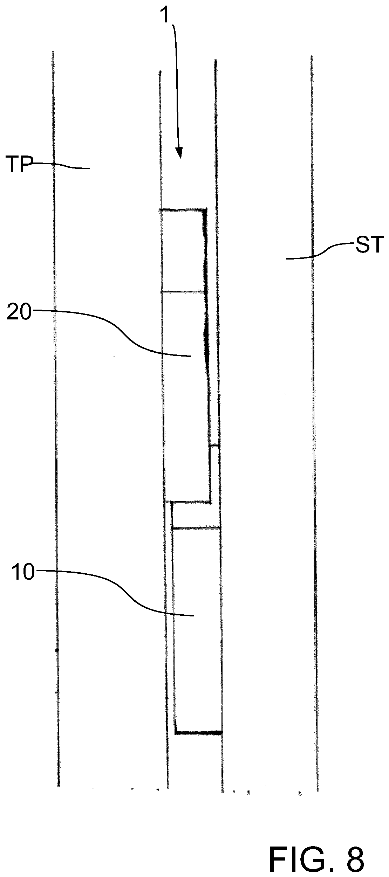

Fig. 6 zeigt eine schematische perspektivische Ansicht einer Verriegelungsvorrichtung 1 zum Verriegeln einer Kraftfahrzeug-Schwenktüre ST mit Hubfunktion an einem Kraftfahrzeug-Türportal TP. Fig. 6 zeigt die Verriegelungsvorrichtung 1 in entriegeltem Zustand. Fig. 7 zeigt eine schematische perspektivische Ansicht der Verriegelungsvorrichtung 1 aus Fig. 6 in verriegeltem Zustand, während Fig. 8 eine schematische Seitenansicht der Verriegelungsvorrichtung 1 aus den Figuren 6 und 7 in verriegeltem Zustand zeigt.

Wie in den Figuren 6 bis 8 zu sehen, ist das erste Verriegelungsteil 10 an der Türe ST befestigt und das zweite Verriegelungsteil 20 ist an dem Türportal TP befestigt.

Das erste Verriegelungsteil 10 wird während des Schließvorgangs der Türe ST unter das zweite Verriegelungsteil 20 verschwenkt und verriegelt selbstzentrierend mit dem zweiten Verriegelungsteil 20, wenn die Türe ST und somit das erste Verriegelungsteil 10 eine Hubbewegung ausführt oder allgemein die Türe ST geschlossen wird oder ist.

Zum Öffnen der Türe ST wird zunächst die Hubbewegung der Türe ST reversiert, um die Verriegelungsvorrichtung 1' in einen entriegelten Zustand zu bringen, woraufhin die Türe ST wieder nach außen verschwenkbar ist, um in einen geöffneten Zustand gebracht werden zu können.

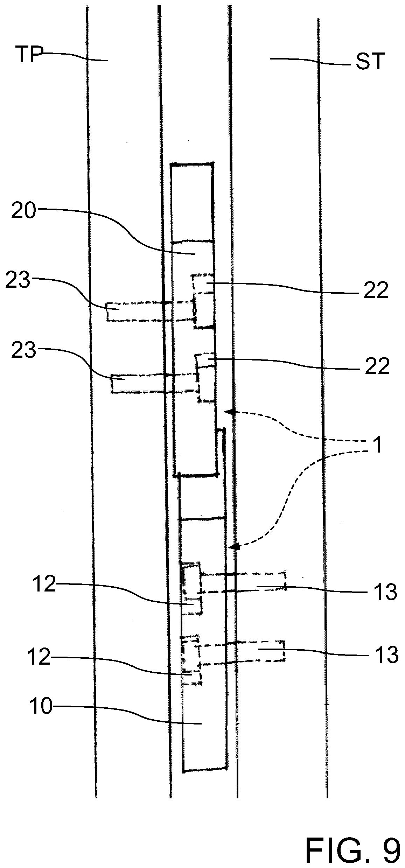

Fig. 9 zeigt eine schematische Seitenansicht einer Verriegelungsvorrichtung 1 in verriegeltem Zustand gemäß einer nicht erfindungsgemäßen Ausführungsform. Eine Besonderheit der in Fig. 9 gezeigten Ausführungsform ist, dass das erste Verriegelungsteil 10 Langlöcher 12 umfasst und das zweite Verriegelungsteil 20 Langlöcher 22 umfasst. Dadurch ist einerseits die Befestigungsposition des ersten Verriegelungsteils 10 an der Türe ST entlang der Langlöcher 12 veränderbar einstellbar und andererseits die Befestigungsposition des zweiten Verriegelungsteils 20 an dem Türportal TP entlang der Langlöcher 22 veränderbar einstellbar. Insbesondere ist das erste Verriegelungsteil 10 über die Langlöcher 12 und Befestigungsmittel 13 in Form von Schrauben an der Türe ST befestigt und das zweite Verriegelungsteil 20 ist über die Langlöcher 22 und Befestigungsmittel 23 in Form von Schrauben an dem Türportal TP befestigt.

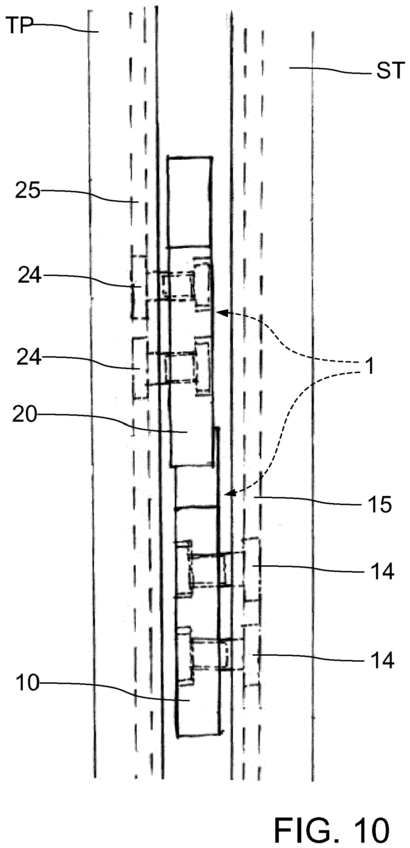

Fig. 10 zeigt eine schematische Seitenansicht einer Verriegelungsvorrichtung 1 in verriegeltem Zustand gemäß einer Ausführungsform der Erfindung. Erfindungsgemäß umfasst das erste Verriegelungsteil 10 Nutensteine 14, über die das erste Verriegelungsteil 10 an der Türe ST befestigt ist und die entlang einer Längsnut 15 in der Türe ST positioniert sind. Ebenso umfasst das zweite Verriegelungsteil 20 Nutensteine 24, über die das zweite Verriegelungsteil 20 an dem Türportal TP befestigt ist und die entlang einer Längsnut 25 in dem Türportal TP positioniert sind. Die Nutensteine 14 und die Längsnut 15 ermöglichen, dass die Befestigungsposition des ersten Verriegelungsteils 10 entlang der Längsnut 15 veränderbar einstellbar ist, während die Nutensteine 24 und die Längsnut 25 ermöglichen, dass die Befestigungsposition des zweiten Verriegelungsteils 20 entlang der Längsnut 25 veränderbar einstellbar ist.

Die Erfindung ist nicht auf die vorstehend beschriebenen bevorzugten Ausführungsbeispiele beschränkt. Der Schutzumfang wird allein durch die anhängigen Ansprüche definiert.

## Patentansprüche

1. Verriegelungsvorrichtung (1) zum Verriegeln einer Kraftfahrzeug-Türe (ST), insbesondere einer Kraftfahrzeug-Schwenktüre mit Hubfunktion, an einem Kraftfahrzeug-Türportal (TP), mit:
- einem ersten Verriegelungsteil (10) zur Befestigung an der Türe (ST), und
- einem zweiten Verriegelungsteil (20) zur Befestigung an dem Türportal (TP),
- wobei das erste Verriegelungsteil (10) und das zweite Verriegelungsteil (20) konfiguriert sind, um miteinander zu verriegeln,
**dadurch gekennzeichnet, dass**
- das erste Verriegelungsteil (10) zumindest einen Nutenstein (14) umfasst, über den das erste Verriegelungsteil (10) an der Türe (ST) befestigbar ist und der konfiguriert ist, um in einer Längsnut (15) in der Türe (ST) positioniert zu werden, und das zweite Verriegelungsteil (20) zumindest einen Nutenstein (24) umfasst, über den das zweite Verriegelungsteil (20) an dem Türportal (TP) befestigbar ist und der konfiguriert ist, um in einer Längsnut (25) in dem Türportal (TP) positioniert zu werden, so dass die Befestigungspositionen des ersten Verriegelungsteils (10) und des zweiten Verriegelungsteils (20) entlang der Längsnuten (15, 25) veränderbar einstellbar sind, und
- das erste Verriegelungsteil (10) und das zweite Verriegelungsteil (20) im Wesentlichen identisch ausgeführt sind, und/oder
- das erste Verriegelungsteil (10) und das zweite Verriegelungsteil (20) so konfiguriert sind, dass sie selbstzentrierend miteinander verriegeln.

2. Verriegelungsvorrichtung (1) nach Anspruch 1, **dadurch gekennzeichnet, dass** das erste Verriegelungsteil (10) einen keilförmigen Vorsprung (11) umfasst und das zweite Verriegelungsteil (20) eine keilförmige Aussparung (21) umfasst, die so konfiguriert sind, dass sie selbstzentrierend miteinander verriegeln.

3. Verriegelungsvorrichtung (1) nach Anspruch 1 oder 2, **dadurch gekennzeichnet, dass** der keilförmige Vorsprung (11) durch zwei Verriegelungsflächen (11a, 11b) definiert wird und die keilförmige Aussparung (21) durch zwei Verriegelungsflächen (21a, 21b) definiert wird.

4. Verriegelungsvorrichtung (1) nach Anspruch 2 oder 3, **dadurch gekennzeichnet, dass** der keilförmige Vorsprung (11) und die keilförmige Aussparung (21) im Wesentlichen V-förmig ausgebildet sind.

5. Verriegelungsvorrichtung (1) nach einem der vorhergehenden Ansprüche, **dadurch gekennzeichnet, dass** das erste Verriegelungsteil (10) zumindest ein Langloch (12) umfasst und das zweite Verriegelungsteil (20) zumindest ein Langloch (22) umfasst, so dass die Befestigungspositionen des ersten Verriegelungsteils (10) und des zweiten Verriegelungsteils (20) entlang der Langlöcher (12, 22) veränderbar einstellbar sind.

6. Verriegelungsvorrichtung (1) nach Anspruch 5, **dadurch gekennzeichnet, dass** das erste Verriegelungsteil (10) über das zumindest eine Langloch (12) davon und zumindest ein Befestigungsmittel (13) an der Türe (ST) befestigbar ist und das zweite Verriegelungsteil (20) über das zumindest eine Langloch (22) davon und zumindest ein Befestigungsmittel (23) an dem Türportal (TP) befestigbar ist.

7. Verriegelungsvorrichtung (1) nach einem der vorhergehenden Ansprüche, **dadurch gekennzeichnet, dass** das erste Verriegelungsteil (10) und das zweite Verriegelungsteil (20) so konfiguriert sind, dass sie selbstzentrierend miteinander verriegeln, wenn das erste Verriegelungsteil (10) eine Hubbewegung ausführt und/oder wenn das Türportal (TP) durch die Türe (ST) geschlossen ist oder wird.

8. Verriegelungsvorrichtung (1) nach einem der vorhergehenden Ansprüche, **dadurch gekennzeichnet, dass** das erste Verriegelungsteil (10) während des Schließvorgangs der Türe (ST) unter das zweite Verriegelungsteil (20) bewegbar ist und mit dem zweiten Verriegelungsteil (20) vorzugsweise selbstzentrierend verriegelt, wenn die Türe (ST) eine Hubbewegung ausführt.

9. Anordnung, umfassend eine Kraftfahrzeug-Türe (ST), vorzugsweise Kraftfahrzeug-Schwenktüre mit Hubfunktion, und ein Kraftfahrzeug-Türportal (TP) und ferner zumindest eine Verriegelungsvorrichtung (1) nach Anspruch 1.

10. Anordnung nach Anspruch 9, umfassend zwei Verriegelungsteile (10) an der Türe (ST) und zwei Verriegelungsteile (20) an dem Türportal (TP).

11. Anordnung nach Anspruch 9 oder 10, mit zumindest einer Verriegelungsvorrichtung (1) nach einem der Ansprüche 1 bis 8.

12. Kraftfahrzeug, insbesondere Nutzfahrzeug, mit einer Anordnung nach einem der Ansprüche 9 bis 11.

## Claims

1. A locking device (1) for locking a motor vehicle door (ST), in particular a motor vehicle swing door with a lifting function, to a motor vehicle door portal (TP), having:
- a first locking part (10) for fastening to the door (ST), and
- a second locking part (20) for fastening to the door portal (TP),
- wherein the first locking part (10) and the second locking part (20) are configured to be locked together,
**characterized in that**
- the first locking part (10) comprises at least one sliding block (14) via which the first locking part (10) is able to be fastened to the door (ST) and which is configured to be positioned in a longitudinal groove (15) in the door (ST), and the second locking part (20) comprises at least one sliding block (24) via which the second locking part (20) is able to be fastened to the door portal (TP) and which is configured to be positioned in a longitudinal groove (25) in the door portal (TP), such that the fastening positions of the first locking part (10) and of the second locking part (20) are settable in a variable manner along the longitudinal grooves (15, 25), and
- the first locking part (10) and the second locking part (20) are embodied in a substantially identical manner, and/or
- the first locking part (10) and the second locking part (20) are configured such that they are locked together in a self-centring manner.

2. The locking device (1) according to Claim 1, **characterized in that** the first locking part (10) comprises a wedge-shaped protrusion (11) and the second locking part (20) comprises a wedge-shaped cutout (21), which are configured such that they are locked together in a self-centring manner.

3. The locking device (1) according to Claim 1 or 2, **characterized in that** the wedge-shape protrusion (11) is defined by two locking faces (11a, 11b) and the wedge-shaped cutout (21) is defined by two locking faces (21a, 21b) .

4. The locking device (1) according to Claim 2 or 3, **characterized in that** the wedge-shaped protrusion (11) and the wedge-shaped cutout (21) are formed in a substantially V-shaped manner.

5. The locking device (1) according to one of the preceding claims, **characterized in that** the first locking part (10) comprises at least one slot (12) and the second locking part (20) comprises at least one slot (22), such that the fastening positions of the first locking part (10) and of the second locking part (20) are settable in a variable manner along the slots (12, 22).

6. The locking device (1) according to Claim 5, **characterized in that** the first locking part (10) is able to be fastened to the door (ST) via the at least one slot (12) of said locking part and at least one fastening means (13), and the second locking part (20) is able to be fastened to the door portal (TP) via the at least one slot (22) of said locking part and at least one fastening means (23).

7. The locking device (1) according to one of the preceding claims, **characterized in that** the first locking part (10) and the second locking part (20) are configured such that they are locked together in a self-centring manner when the first locking part (10) carries out a lifting movement and/or when the door portal (TP) is or has been closed by the door (ST).

8. The locking device (1) according to one of the preceding claims, **characterized in that** the first locking part (10) is movable under the second locking part (20) during the operation of closing the door (ST) and is locked together with the second locking part (20), preferably in a self-centring manner, when the door (ST) carries out a lifting movement.

9. An arrangement comprising a motor vehicle door (ST), preferably a motor vehicle swing door having a lifting function, and a motor vehicle door portal (TP) and also at least one locking device (1) according to Claim 1.

10. The arrangement according to Claim 9, comprising two locking parts (10) on the door (ST) and two locking parts (20) on the door portal (TP).

11. The arrangement according to Claim 9 or 10, having at least one locking device (1) according to one of Claims 1 to 8.

12. A motor vehicle, in particular a commercial vehicle, having an arrangement according to one of Claims 9 to 11.

## Revendications

1. Dispositif de verrouillage (1) servant au verrouillage d'une porte (ST) de véhicule automobile, en particulier d'une porte pivotante de véhicule automobile à fonction de levage, sur un encadrement de porte (TP) de véhicule automobile, comportant :
- une première partie de verrouillage (10) pour la fixation à la porte (ST), et
- une deuxième partie de verrouillage (20) pour la fixation à l'encadrement de porte (TP),
- la première partie de verrouillage (10) et la deuxième partie de verrouillage (20) étant configurées pour se verrouiller l'une avec l'autre,
**caractérisé en ce que**
- la première partie de verrouillage (10) comporte au moins un coulisseau (14) par le biais duquel la première partie de verrouillage (10) peut être fixée à la porte (ST) et lequel est configuré pour être positionné dans une rainure longitudinale (15) dans la porte (ST), et la deuxième partie de verrouillage (20) comporte au moins un coulisseau (24) par le biais duquel la deuxième partie de verrouillage (20) peut être fixée à l'encadrement de porte (TP) et lequel est configuré pour être positionné dans une rainure longitudinale (25) dans l'encadrement de porte (TP), de telle sorte que les positions de fixation de la première partie de verrouillage (10) et de la deuxième partie de verrouillage (20) soient réglables de manière variable le long des rainures longitudinales (15, 25), et
- la première partie de verrouillage (10) et la deuxième partie de verrouillage (20) sont réalisées de manière sensiblement identique, et/ou
- la première partie de verrouillage (10) et la deuxième partie de verrouillage (20) sont configurées de telle sorte qu'elles se verrouillent l'une avec l'autre avec centrage automatique.

2. Dispositif de verrouillage (1) selon la revendication 1, **caractérisé en ce que** la première partie de verrouillage (10) comporte une saillie cunéiforme (11) et la deuxième partie de verrouillage (20) comporte un évidement cunéiforme (21) qui sont configurés de telle sorte qu'ils se verrouillent l'un avec l'autre avec centrage automatique.

3. Dispositif de verrouillage (1) selon la revendication 1 ou 2, **caractérisé en ce que** la saillie cunéiforme (11) est définie par deux surfaces de verrouillage (11a, 11b) et l'évidement cunéiforme (21) est défini par deux surfaces de verrouillage (21a, 21b).

4. Dispositif de verrouillage (1) selon la revendication 2 ou 3, **caractérisé en ce que** la saillie cunéiforme (11) et l'évidement cunéiforme (21) sont réalisés sensiblement en forme de V.

5. Dispositif de verrouillage (1) selon l'une des revendications précédentes, **caractérisé en ce que** la première partie de verrouillage (10) comporte au moins un trou oblong (12) et la deuxième partie de verrouillage (20) comporte au moins un trou oblong (22), de telle sorte que les positions de fixation de la première partie de verrouillage (10) et de la deuxième partie de verrouillage (20) soient réglables de manière variable le long des trous oblongs (12, 22).

6. Dispositif de verrouillage (1) selon la revendication 5, **caractérisé en ce que** la première partie de verrouillage (10) peut être fixée à la porte (ST) par le biais dudit au moins un trou oblong (12) de celle-ci et par le biais d'au moins un moyen de fixation (13) et la deuxième partie de verrouillage (20) peut être fixée à l'encadrement de porte (TP) par le biais dudit au moins un trou oblong (22) de celle-ci et par le biais d'au moins un moyen de fixation (23).

7. Dispositif de verrouillage (1) selon l'une des revendications précédentes, **caractérisé en ce que** la première partie de verrouillage (10) et la deuxième partie de verrouillage (20) sont configurées de telle sorte qu'elles se verrouillent l'une avec l'autre avec centrage automatique lorsque la première partie de verrouillage (10) effectue un mouvement de levage et/ou lorsque l'encadrement de porte (TP) est ou devient fermé par la porte (ST).

8. Dispositif de verrouillage (1) selon l'une des revendications précédentes, **caractérisé en ce que** la première partie de verrouillage (10) est déplaçable en dessous de la deuxième partie de verrouillage (20) pendant l'opération de fermeture de la porte (ST) et se verrouille avec la deuxième partie de verrouillage (20) de préférence avec centrage automatique lorsque la porte (ST) effectue un mouvement de levage.

9. Ensemble, comportant une porte (ST) de véhicule automobile, de préférence une porte pivotante de véhicule automobile à fonction de levage, et un encadrement de porte (TP) de véhicule automobile et en outre au moins un dispositif de verrouillage (1) selon la revendication 1.

10. Ensemble selon la revendication 9, comportant deux parties de verrouillage (10) sur la porte (ST) et deux parties de verrouillage (20) sur l'encadrement de porte (TP) .

11. Ensemble selon la revendication 9 ou 10, comportant au moins un dispositif de verrouillage (1) selon l'une des revendications 1 à 8.

12. Véhicule automobile, en particulier véhicule utilitaire, comportant un ensemble selon l'une des revendications 9 à 11.
